(19) Europäisches Patentamt
European Patent Office
Office européen des brevets

(11) **EP 2 915 621 A2**

(12) **EUROPEAN PATENT APPLICATION**

(43) Date of publication:
**09.09.2015 Bulletin 2015/37**

(51) Int Cl.:
***B23K 26/38*** *(2014.01)*

(21) Application number: **15000422.4**

(22) Date of filing: **12.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.03.2014 US 201414197512**

(71) Applicant: **Caterpillar, Inc.**
**Peoria, IL 61629-9510 (US)**

(72) Inventors:
• **Marchione, Thierry A.**
**Peoria, Illinois 61629-9510 (US)**
• **Grant, Marion B., Jr.**
**Peoria, Illinois 61629-9510 (US)**

(74) Representative: **Kramer Barske Schmidtchen**
**Patentanwälte PartG mbB**
**European Patent Attorneys**
**Landsberger Strasse 300**
**80687 München (DE)**

(54) **Method of laser drilling a component**

(57)     A method (400) of laser drilling a component is disclosed. The method (400) includes contacting a sacrificial material (130) with the component. The method (400) also includes aligning a laser drilling tool (116) with the sacrificial material (130) and the component. The method (400) further includes incidenting a laser beam (122) on the sacrificial material (130). The method (400) includes containing a trumpet effect caused by the laser beam (122) within a thickness of the sacrificial material (130). Further, the method (400) includes forming a reverse tapered orifice (110) within the component. The method (400) also includes removing the sacrificial material (130) from the component.

*FIG. 2*

EP 2 915 621 A2

**Description**

Technical Field

The present disclosure relates to a system and method for laser drilling of a component, and more particularly, to the system and method of laser drilling a reverse tapered orifice within the component.

Background

A laser drilling process may be used for creating orifices within a component, for example, a fuel injector. However, in some situations, the laser drilling process may increase a surface roughness of the orifices which may lead to a clogging of fuel flowing through the orifice. Additionally, the laser drilling process may lead to an increase in a K factor associated with fluid dispersion characteristics of the orifice. The term "K factor" is defined as the difference between diameters of the orifice at each end divided by ten.

U.S. Patent No. 8,268,182 discloses a processing method of forming a through-hole in a work-piece by means of a pulsed laser beam includes the steps of providing a removable sacrifice layer on the work-piece, forming a through-hole in the work-piece by the laser beam in a state where the sacrifice layer is provided, and removing the sacrifice layer from the work-piece after the step of forming the through-hole.

The present disclosure is directed to mitigating or eliminating one or more of the drawbacks discussed above.

Summary of the Disclosure

In one aspect of the present disclosure, a method of laser drilling a component is disclosed. The method includes contacting a sacrificial material with the component. The method also includes aligning a laser drilling tool with the sacrificial material and the component. The method further includes incidenting a laser beam on the sacrificial material. The method includes containing a trumpet effect caused by the laser beam within a thickness of the sacrificial material. Further, the method includes forming a reverse tapered orifice within the component. The method also includes removing the sacrificial material from the component.

In another aspect of the present disclosure, a system for laser drilling an orifice within a fuel injector is disclosed. The system includes a laser drilling tool. The system also includes a sacrificial material placed in contact with the fuel injector. The sacrificial material is aligned with the laser drilling tool. Further, the sacrificial material is positioned at an end of the component at which a laser beam is incident. Further, a thickness of the sacrificial material is such that a trumpet effect caused by the laser beam is contained within the sacrificial material.

In yet another aspect of the present disclosure, a fuel injector is disclosed. The fuel injector includes a body and a plunger. The fuel injector includes a smoothened inner wall of the fuel injector defining a reverse tapered orifice therein. The smoothened inner wall is configured to be formed by detachably connecting a sacrificial material at an end of the component at which a laser beam is incident. Further, a thickness of the sacrificial material is such that a trumpet effect caused by the laser beam is contained within the sacrificial material.

Other features and aspects of this disclosure will be apparent from the following description and the accompanying drawings.

Brief Description of the Drawings

FIG. 1 is a cross-sectional view of an exemplary component for laser drilling, according to one embodiment of the present disclosure;
FIG. 2 is a schematic diagram of a laser drilling system for creating an orifice within the component;
FIG. 3 is a cross-sectional view showing a portion of the component, the orifice and a sacrificial material provided in contact with the component; and
FIG. 4 is a flowchart for a method of laser drilling the component.

Detailed Description

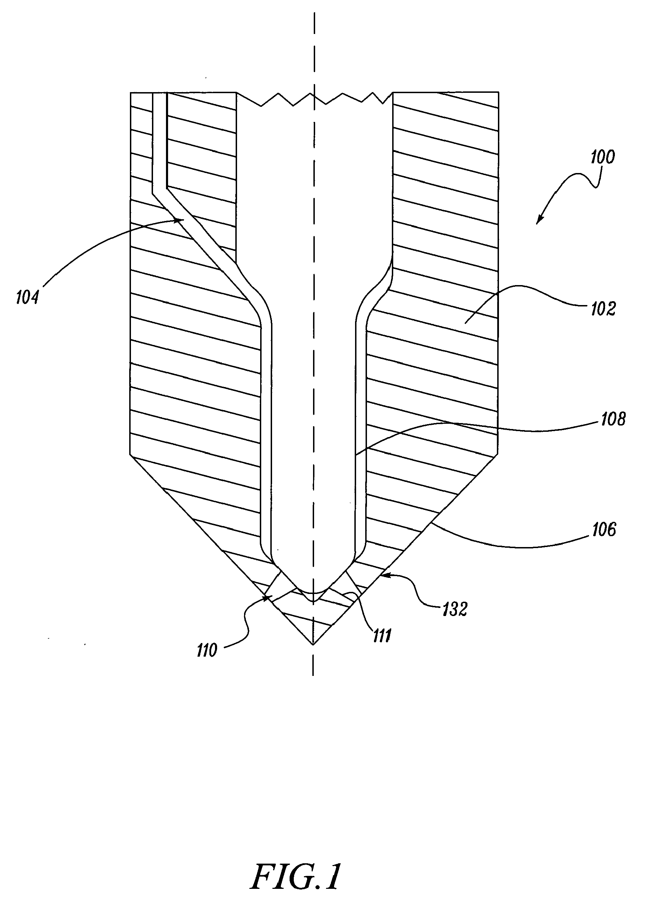

Wherever possible, the same reference numbers will be used throughout the drawings to refer to the same or the like parts. FIG. 1 is a cross-sectional view of an exemplary component, according to one embodiment of the present disclosure. More specifically, the component includes a fuel injector 100 of an engine (not shown). The fuel injector 100 can be used in an internal combustion engine or any other machine where fuel injection takes place. The fuel injector 100 can be configured to deliver a uniformly atomized fuel mixture into a combustion chamber (not shown) of the engine.

The fuel injector 100 includes a substantially solid body 102. The fuel injector 100, and the body 102 thereof, can include various features which can define the fuel injector 100 as including a hollow cylindrical configuration or design. The fuel injector 100 can include a fuel delivery passage 104. The fuel delivery passage 104 can be provided within the body 102 of the fuel injector 100. The fuel delivery passage 104 can be configured to fluidly communicate and deliver fuel through the body 102 of the fuel injector 100 such that the fuel can be filled or otherwise delivered within the body 102 of the fuel injector 100 to effectuate discharge of fuel as provided herein. The body 102 can also include a conical portion or a spray tip 106 provided at a lower or fuel outlet section of the fuel injector 100.

In the exemplary embodiment shown in FIG. 1, the fuel injector 100 also includes a plunger 108 slidably received within the body 102 of the fuel injector 100. The plunger 108 can include a solid circular cross-section. As further illustrated in the exemplary embodiment shown in FIG. 1, the plunger 108 can include a conical end portion or tip provided at a lower end of the plunger 108, wherein the conical end portion or tip of the plunger 108 can be formed to include a dimension and shape which substantially correspond to and align with a dimension and shape of an inner part of the spray tip 106. During operation, the fuel injector 100 can be energized or otherwise actuated such that the pressurized fuel within the body 102 of the fuel injector 100 can be sprayed out through a single or a plurality of orifices 110, which in one example can be via the energization of an electromagnet which can cause the plunger 108 to move within the body 102 of the fuel injector 100 to effectuate an injection event such that the pressurized fuel can be sprayed out through a single or a plurality of orifices 110. The shape of the one or more orifices 110 (also referred to as the "reverse tapered orifice(s) 110", as provided herein) is provided in a manner such that the fuel sprayed out is atomized or discharged as fine liquid particles, so that the fuel particles may be burnt easily. The design of the fuel injector 100 included herein is exemplary. The number of the orifices 110 may vary based on the application.

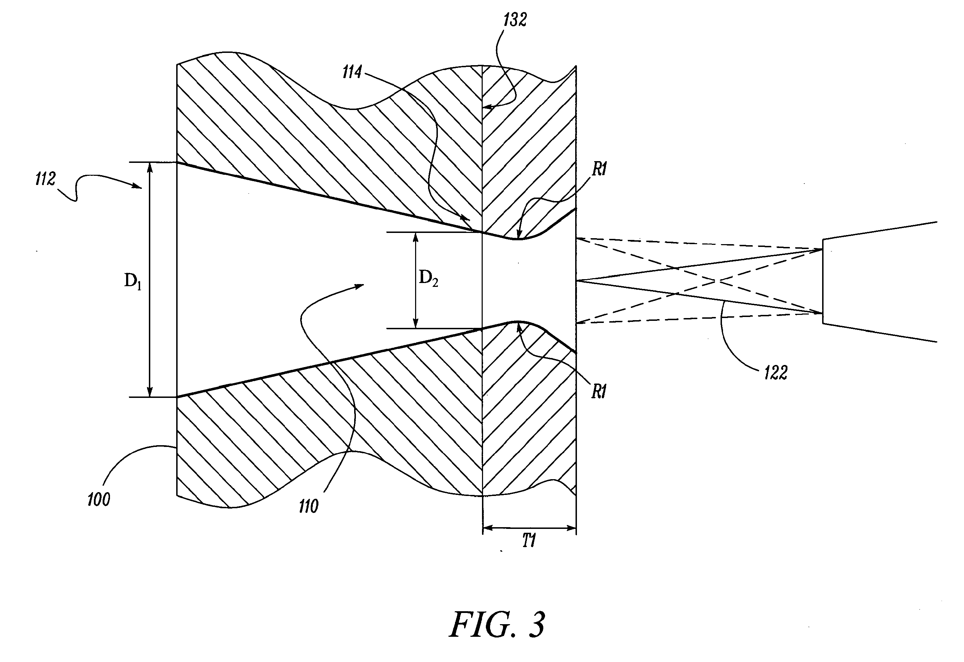

As shown in the accompanying figures, each of the one or more orifices 110 includes an orifice inner wall 111 which defines each orifice 110 as an open passage formed within and extending through the body 102 of the fuel injector 100 within the spray tip 106 thereof. In particular, each orifice 110 has a reverse tapered configuration. The term "reverse tapered orifice" used herein refers to each orifice 110 which is drilled such that each orifice 110 and orifice inner wall 111 thereof is formed by an inwardly sloping orifice inner wall 111 having a diameter which gradually decreases along the length of each orifice 110 from a diameter $D_1$ of the orifice 110 at a fuel entry point 112 (See FIG. 3) of the orifice 110 positioned proximate to the inner part or interior of the spray tip 106 to a diameter $D_2$ at a fuel exit point 114 (See FIG. 3) of the orifice 110 positioned proximate to and opening out into an outer surface of the fuel injector 100, shown in the Figures and defined herein as an incident end 132 of the fuel injector 100 (wherein $D_1 > D_2$).

As such, each orifice 110 can be defined as including a generally frustoconical three-dimensional passage shape or geometry. The fuel dispersion characteristics of the fuel injector 100 may depend on factors such as, a cross-section of the orifice 110. One of the parameters associated with the cross section of the orifice 110 is defined as "K factor" such that:

$$K = \frac{D1 - D2}{10} \qquad\qquad ...\text{Equation 1}$$

wherein,

      $D_1$ = entry diameter of orifice
      $D_2$ = exit diameter of orifice

The entry and exit diameters $D_1$, $D_2$ of the orifice 110 can be specified such that an appropriate and desired, specific K factor is obtained. In one embodiment, the value of the K factor can be approximately between -5 and 10 for application in the fuel injector 100. It should be noted that other parameters may be considered in different applications of the disclosure and is not limited to that disclosed herein.

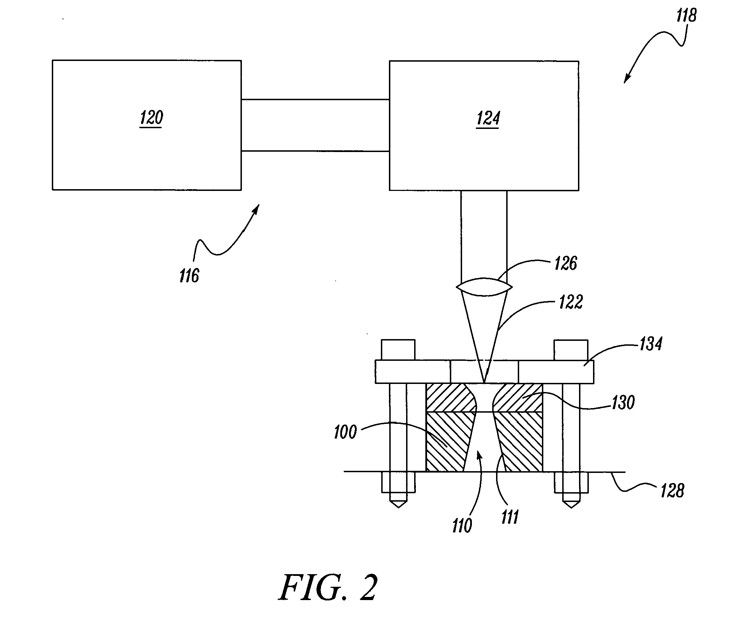

The present disclosure contemplates drilling the reverse tapered orifice 110 within the fuel injector 100, herein disclosed as the fuel injector 100, using a laser drilling tool 116. However, the disclosure may be utilized for other applications as well without any limitation. The method of providing the reverse tapered orifices 110 within the fuel injector 100 will now be described in detail in connection with FIGS. 2 and 3.

Referring to FIG. 2, schematic view of an exemplary laser drilling system 118 is provided, according to one embodiment of the present disclosure. The laser drilling system 118 includes the laser drilling tool 116. The laser drilling tool 116 can include a laser source 120 which emits a laser beam 122. The laser source 120 can be any type of known light source that is capable of producing the laser beam 122 of required power, coherency, pulse width, pulse repetition time, and wavelength based on the application. The laser source 120 can be selected such that the laser beam 122 is compatible with the fuel injector 100 to be laser drilled. Further, a frequency of the laser beam 122 used for drilling of the orifice 110 may also vary based on the application. As further disclosed herein, according, at least in part, to the method and laser drilling system 118 of the present disclosure, the laser beam 122 of an athermal high pulse frequency can produce reverse tapered orifices 110 having a smoothened orifice inner wall 111.

The laser drilling tool 116 also includes a laser drilling head 124. In the illustrated embodiment, the laser drilling head 124 can include a trepanning head configured to produce the reverse tapered orifice 110 within the fuel injector 100. Alternatively, the laser drilling head 124 may embody any other type of drilling head known in the art. The laser drilling head 124 can also include a beam conditioner (not shown) which can be configured to modify a path of the laser beam 122 so that a focus point of the laser beam 122 can execute a circular, elliptical or any other closed loop path. The incident path of the laser beam 122 can form the orifice inner wall 111 which can define an outer periphery of the orifice 110 to be formed using the laser drilling process.

The beam conditioner of the laser drilling head 124 can be configured to receive the laser beam 122 from the laser source 120. The beam conditioner also includes an optical element (not shown). The optical element of the beam conditioner can be configured to modify the path of the laser beam 122. The optical element can be rotatably provided within the beam conditioner. The laser drilling tool 116 can also include a focusing element 126 wherein the laser beam 122 is focused by the focusing element 126 onto the focus point. The laser drilling tool 116 further includes a power supply (not shown) to power the laser drilling tool 116.

Further, the laser drilling system 118 can include a platform 128. The platform 128 can be configured to hold the component, which in the embodiment shown, is fuel injector 100, during a laser drilling operation. The platform 128, in one embodiment, can be movable, such that, after the drilling of an orifice 110, the platform 128 can be moved in order to drill a subsequent orifice 110 on the fuel injector 100. The platform 128 can be embodied as a multi-axis motion platform, wherein in the illustrated embodiment, the platform 128 is a five-axis motion platform. It should be noted that the laser drilling head 124 and the fuel injector 100 may be configured to be movable in relation to each other.

FIG. 3 is a detailed schematic view of a portion of the fuel injector 100 being drilled. A sacrificial material 130 is removably positioned in abutting contact with the fuel injector 100, and more specifically, in abutting contact with the outer surface of the fuel injector 100 defined and shown as the incident end 132 of the fuel injector 100 with respect to the laser beam 122. In one embodiment, the sacrificial material 130 may be maintained in contact with the fuel injector 100 using a pressure tool 134, as illustrated in FIG. 2. Alternatively, or additionally, a spring elasticity of the sacrificial material 130 may help in maintaining the contact with the fuel injector 100. Further, the sacrificial material 130 is positioned in alignment with the laser drilling tool 116. The sacrificial material 130 can be made of a material similar to or, alternatively, different from that of the fuel injector 100. In one embodiment, the sacrificial material 130 can be made of a metal. In another embodiment, the sacrificial material 130 can be made of a ceramic non-metal. In yet another embodiment, the sacrificial material 130 can be made of a polymer. The sacrificial material 130 can embody a strip, a piece of foil, shim stock, a cap or a pre-shaped geometry.

As further shown in the detailed schematic view illustrated in FIG. 3, the sacrificial material 130 is configured or formed to include a thickness T1 which corresponds to and/or is proportionate with respect to a radius R1 of a trumpet effect caused by the laser beam 122, and more particularly, formed by the path and/or orientation of the laser beam 122 during a laser drilling operation and the formation of the reverse tapered orifice 110 such that the arcuate portion of the path of the laser beam 122 defined and shown in FIG. 3 as radius R1 of the trumpet effect is contained within the sacrificial material 130 and the orifice inner wall 111 of the reverse tapered orifice 110 includes a non-curved, or substantially rectilinear reverse tapered profile. The term "trumpet effect" used herein refers to formation of the rounded radius R1 on and/or through a surface on which the laser beam 122 is incident. Accordingly, the thickness T1 of the sacrificial material 130 is substantially equivalent to the chord length of the arc defined by radius R1 of the trumpet effect caused by the laser beam 122.

As indicated above, the reverse tapered orifice 110 is formed within the fuel injector 100 via the laser beam 122, and in a manner consistent with the foregoing, the sacrificial material 130 includes a thickness T1 sized in corresponding proportion and substantially equivalent with the axial path length of the radius R1 of the trumpet effect such that the arcuate contour of the trumpet effect is completely contained within the sacrificial material 130 and does not reach the orifice inner wall 111 of the reverse tapered orifice 110 of the fuel injector 100.

Moreover, the orifice inner walls 111 of the orifices 110 can be formed via the presently disclosed method and system 118 such that the orifice inner walls 111 include a low surface roughness and increased smoothness. Also, as a result of the transition point in the laser beam 122 path and/or angle at the interface between the sacrificial material 130 and the outer surface or incident end 132 of the fuel injector 100 which can be defined by the thickness T1 of the sacrificial material 130, the orifice 110 and the reverse tapered orifice inner walls 111 thereof can be defined by a sharp, un-rounded angle at the fuel exit point 114 (See FIG. 3) of the orifice 110. The sacrificial material 130 is removed at the end of the laser drilling operation.

Industrial Applicability

The present disclosure relates to the laser drilling system 118 for the drilling of the reverse tapered orifices 110 within the fuel injector 100. A combination of the trepanning head and the multi-axis platform 128 may allow for the drilling of orifices 110 having inclined inner walls. Also, the laser drilling system 118 may be utilized in achieving an appropriate and desired, specific value of the K factor for the reverse tapered orifices 110. In one example, the drilling system 118 may be utilized in achieving a K factor for the reverse tapered orifices 110 greater than 4. Additionally, the athermal high pulse frequency of the laser beam 122 allows a very small amount of material removal from the fuel injector 100, thereby creating the reverse tapered orifices 110 with an improved surface finish wherein the orifice inner walls 111 of the orifice 110 are smooth.

The laser drilling system 118 of the present disclosure therefore provides surface roughness equal or better than that provided by traditional techniques of extrusion honing and eliminates surface waviness on the surface of the components being drilled. The laser drilling system 118 also eliminates a risk for recast and fatigue crack propagation within the drilled components. Also, the periphery of the orifice 110 defined on a surface of the fuel injector 100 is sharply formed.

The thickness T1 of the sacrificial material 130 provided in contact with the fuel injector 100 is proportionate to the radius R1 of the trumpet effect, as provided above. Hence, the trumpet effect is eliminated from the fuel injector 100. It should be noted that the laser drilling system 118 disclosed herein is not limited to the application disclosed herein. The disclosure may also be utilized for drilling of the orifices 110 within other components such as, injection meters, fuel filters and so on.

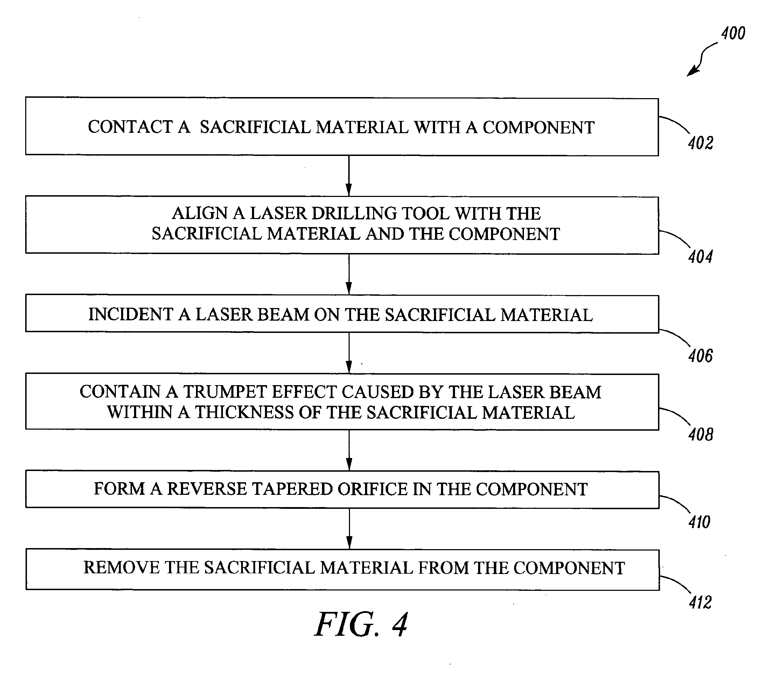

FIG. 4 is a flowchart for a method 400 of laser drilling the fuel injector 100. In the illustrated embodiment, the component includes the fuel injector 100. At step 502, the sacrificial material 130 is contacted with the fuel injector 100. The sacrificial material 130 is maintained in contact with the fuel injector 100, such as, for example, by using the pressure tool 134 or the spring elasticity of the sacrificial material 130. At step 504, the laser drilling tool 116 is aligned with the sacrificial material 130 and the fuel injector 100. At step 506, the laser beam 122 is incident on the sacrificial material 130. At step 508, the trumpet effect caused by the laser beam 122 is contained within the thickness T1 of the sacrificial material 130. At step 510, the reverse tapered orifice 110 is formed within the fuel injector. The reverse tapered orifice 110 includes the smoothened orifice inner wall 111 defining the reverse tapered orifice 110. At step 512, the sacrificial material 130 is removed from the fuel injector 100.

It will be apparent to those skilled in the art that various modifications and variations can be made to the system of the present disclosure without departing from the scope of the disclosure. Other embodiments will be apparent to those skilled in the art from consideration of the specification and practice of the system disclosed herein. It is intended that the specification and examples be considered as exemplary only, with a true scope of the disclosure being indicated by the following claims and their equivalent.

**Claims**

1.    A method (400) of laser drilling a component, the method (400) comprising:

contacting a sacrificial material (130) with the component;
aligning a laser drilling tool (116) with the sacrificial material (130) and the component;
incidenting a laser beam (122) on the sacrificial material (130);
containing a trumpet effect caused by the laser beam (122) within a thickness of the sacrificial material (130);
forming a reverse tapered orifice (110) in the component; and
removing the sacrificial material (130) from the component.

2.    The method (400) of claim 1, wherein the component includes a fuel injector (100).

3.    The method (400) of claim 1, wherein the thickness of the sacrificial material (130) is equal to a radius of the trumpet effect caused by the laser beam (122).

4.    The method (400) of claim 1, wherein the sacrificial material (130) includes any one of a metal, ceramic non-metal, and a polymer.

5.    The method (400) of claim 1, wherein contacting the sacrificial material (130) includes using a pressure tool (134).

6.    The method (400) of claim 1, wherein contacting the sacrificial material (130) includes using spring elasticity of the sacrificial material (130).

7. The method (400) of claim 1, wherein the laser beam (122) is an athermal high pulse frequency laser configured to form a smoothened inner wall within the component, the smoothened inner wall (111) defining the reverse tapered orifice (110).

8. A system (118) for laser drilling an orifice (110) within a fuel injector (100), the system (118) comprising:

a laser drilling tool (116); and
a sacrificial material (130) placed in contact with the fuel injector (100), the sacrificial material (130) aligned with the laser drilling tool (116), the sacrificial material (130) being positioned at an end of the component at which a laser beam (122) is incident, wherein a thickness of the sacrificial material (130) is such that a trumpet effect caused by the laser beam (122) is contained within the sacrificial material (130).

9. The system (118) of claim 8, wherein the thickness of the sacrificial material (130) is equal to a radius of the trumpet effect caused by the laser beam (122).

10. The system (118) of claim 8, wherein the orifice (110) has a reverse tapered configuration, such that a smoothened inner wall (111) of the injector (100) defines the reverse tapered orifice (110) therein.

*FIG.1*

*FIG. 2*

*FIG. 3*

EP 2 915 621 A2

400

```
┌─────────────────────────────────────────────────────────────┐
│     CONTACT A SACRIFICIAL MATERIAL WITH A COMPONENT           │ ╲
└─────────────────────────────────────────────────────────────┘  402
                              │
                              ▼
┌─────────────────────────────────────────────────────────────┐
│         ALIGN A LASER DRILLING TOOL WITH THE                  │ ╲
│      SACRIFICIAL MATERIAL AND THE COMPONENT                   │  404
└─────────────────────────────────────────────────────────────┘
                              │
                              ▼
┌─────────────────────────────────────────────────────────────┐
│   INCIDENT A LASER BEAM ON THE SACRIFICIAL MATERIAL           │ ╲
└─────────────────────────────────────────────────────────────┘  406
                              │
                              ▼
┌─────────────────────────────────────────────────────────────┐
│   CONTAIN A TRUMPET EFFECT CAUSED BY THE LASER BEAM           │ ╲
│      WITHIN A THICKNESS OF THE SACRIFICIAL MATERIAL           │  408
└─────────────────────────────────────────────────────────────┘
                              │
                              ▼
┌─────────────────────────────────────────────────────────────┐
│     FORM A REVERSE TAPERED ORIFICE IN THE COMPONENT           │ ╲
└─────────────────────────────────────────────────────────────┘  410
                              │
                              ▼
┌─────────────────────────────────────────────────────────────┐
│   REMOVE THE SACRIFICIAL MATERIAL FROM THE COMPONENT          │ ╲
└─────────────────────────────────────────────────────────────┘  412
```

*FIG. 4*

**EP 2 915 621 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8268182 B